# EUROPEAN PATENT SPECIFICATION

(11) **EP 0 417 413 B1**
(45) Date of publication and mention of the grant of the patent: **04.05.1994**
(21) Application number: 90112336.4
(22) Date of filing: 28.06.1990
(51) Int. Cl.: A23G 9/26, A23G 9/30, A23G 9/22, A23G 9/08

(54) **Method and machine for making ice-lollies, ice cream on sticks, or the like**
Verfahren und Einrichtung zur Herstellung von Lutsch-Eis, Stielspeiseeis oder ähnliches
Procédé et appareil pour la fabrication de sucettes congelées, de bâtons de crème glacée et analogues

(30) Priority: 14.09.1989 IT 1257389
(43) Date of publication of application: 20.03.1991
(73) Proprietor: Carpigiani S.r.L., I-40011 Anzola Emilia, Bologna (IT)
(72) Inventor: Manfroni, Ezio, I-40037 Sasso Marconi (BO) (IT)
(74) Representative: Porsia, Attilio, Dr.

(56) References cited:
- DE-C- 800 300
- FR-A- 1 060 662
- FR-A- 1 539 694
- GB-A- 699 404
- US-A- 2 637 668
- US-A- 3 233 562

## Description

The present invention relates to the machines for making the so-called ice-lollies, or the machines for hardening the ice cream on sticks.

More particularly, the invention relates to a machine of the type mentioned above, which is particularly suitable for small handicraft production.

The presently used machines for making ice-lollies usually comprise two tanks, namely a freezing tank containing unfreezable liquid (usually ethylene glycol) in heat-exchange relation with the evaporator of a refrigerating unit, and a de-freezing tank containing a hot liquid. The mold for the ice-lollies is passed alternately from the freezing tank to the de-freezing tank in order to release said ice-lollies from said mold to withdraw them from the mold easily.

This solution is not suitable for manufacturing a machine for small handicraft production.

From GB-A-699.404 a machine for the production of ice-lollies is known, according to which the molds for the production of the ice-lollies are in heat-exchange relation with the evaporator of a vapor-compression machine, the defreezing of the molds being obtained by directing the flow of hot compressed gas to the evaporator, by-passing the condenser and the expansion valve of the vapor-compression machine.

From DE-A- 800.300 a machine is known for the production of ice-sticks, according to which the molds for the production of the said ice-sticks are in heat-exchange relation with the evaporator of a vapor-compression machine, the defreezing of the molds being obtained by directing the flow of hot compressed gas to the evaporator, by means of a valve arrangement which by-passes periodically the condenser and the expansion valve of the vapor-compression machine.

Both said known machines are energy-consuming and have long freezing and defreezing times.

According to the invention, this problem has been solved by providing a machine for making ice-lollies wherein the molds for the ice-lollies are immersed in a tank, in a heat-exchange relation with the evaporator of a refrigerating unit, a first circulating pump being provided which, during the freezing of the ice-lolly mixture in the molds, feeds to and circulates in said tank a cold unfreezable liquid withdrawn from a cold liquid reservoir and fed to said tank through a flap valve. As soon as the ice-lolly mixture has frozen, a thermostat or any other suitable means such as a timer, a pressure switch, or the like, disactivates the refrigerating unit and stops the operation of the cold liquid circulating pump, whereby the cold liquid flows back into the cold liquid reservoir. On completion of this back-flow, a second circulating pump is activated either manually or automatically to pump a hot liquid from a reservoir having heating means, through said flap valve, to the tank where the ice-lollies have been formed, so as to cause said ice-lollies to be released from the walls of the molds. Thereafter, the hot liquid is flowed back into its reservoir, and the cold liquid circulating pump is re-started for a new ice-lolly making cycle.

A further object of the present invention is to provide a particular three-way flap valve, used for the performance of said cycle.

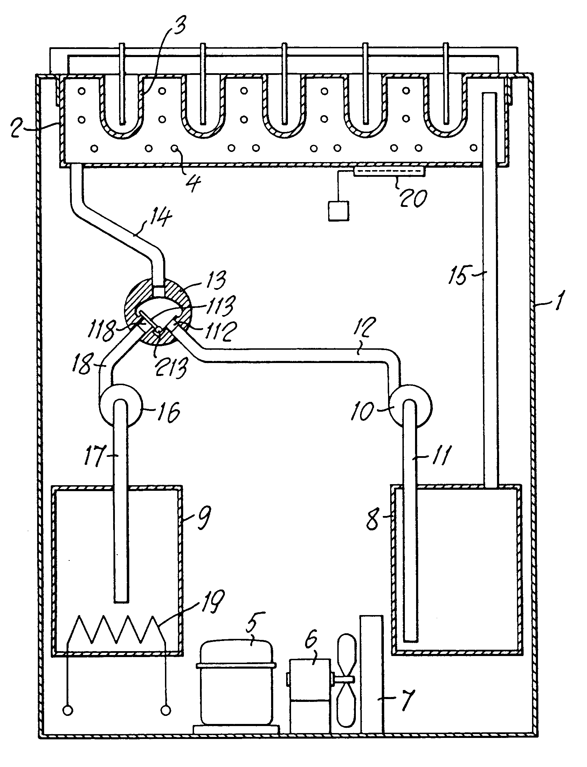

Further objects and advantages of the present invention will become more apparent during the following detailed description of a preferred embodiment of a machine according to the invention, diagrammatically shown as a non-limiting example in the cross sectional view of the accompanying drawing.

With reference to the drawing, the machine being disclosed comprises a casing 1 having embedded in the top portion thereof a tank 2 containing the molds 3 for making ice-lollies. Arranged in the tank 2 is an evaporator coil 4 of a refrigerating unit comprising a motor-driven compressor 5, a fan 6 and a condenser 7, housed in the base portion of the casing 1.

The base portion of the casing 1 also accommodates two reservoirs 8 and 9. The suction side of a pump 10 communicates, through a pipe 11, with the lower portion of the reservoir 8. The delivery side of said pump communicates, through a pipe 12, with the inlet side of a flap valve 13 (to be described below) the outlet side of which communicates, through a pipe 14, with the bottom of the tank 2. A spillway pipe 15 communicating at one end with the top level of the tank 2, and at the opposite end with the reservoir 8, is used to maintain the level of the cold liquid in the tank 2 constant.

The suction side of a second pump 16 communicates, through a pipe 17, with the lower portion of the reservoir 9, and its delivery side communicates, through the pipe 18, with a second inlet of the flap valve 13. The reservoir 9, whose capacity is reduced to a smaller content than the tank 2 to avoid any overflow into the reservoir 8 through the spillway pipe 15, is provided at the bottom thereof with a heating resistor 19, while the tank 2 is provided at the bottom thereof with a control thermostat 20.

The flap valve 13 is of the type having two inlets and one outlet, said inlets being controlled, alternately, by a pivotable valve member 113, pivoted at 213, which is moved by the liquid flow, alternately, to the closed position of either one of the valve seats 118 or 112.

The operation of the machine described above is now apparent.

During the ice-lolly forming step, the flap member 113 of the valve 13 is displaced so as to close the valve seat 118. The pump 10 is operating and the unfreezable liquid (usually ethylene glycol) is pumped from the reservoir 8, through the pipe 11, pump 10, pipe 12, valve 13, and pipe 14, into the tank 2, where it is chilled by the coil 4 of the refrigerating unit, and is re-circulated into the reservoir 8 through the spillway pipe 15.

As soon as the liquid in the tank 2 has reached the hardening temperature of the water-and-syrup mixture (or of the soft ice cream, in case of manufacture of ice creams on sticks) for the formation of ice- lollies in the molds 3, the thermostat 20 or any other suitable means such as a timer, a pressure switch, or the like, stops the pump 10 and the refrigerating unit 4,5,6 and 7. Upon stopping the pump 10, the cold glycol flows out of the tank 2 through the pipe 14, valve 13, duct 12, pump 10 and duct 11, back into the reservoir 8. On completion of this back-flow, the pump 16 is activated either manually or automatically. The activation of the pump 16 displaces the flap member 113 of the valve 13 to a position to close the seat 112, with simultaneous opening of the communication between the seat 118 and drain pipe 14. Therefore, the hot glycol contained in the reservoir 9 being heated by the resistor 19, is pumped into the tank 2 where it licks the molds 3 containing the ice-lollies, so as to detach the surfaces of the ice-lollies from the mold and permit them to be released in the usual manner. Thereafter, the pump 16 is stopped either manually or automatically and, therefore, the hot liquid flows back into the reservoir 9. The machine is now ready for a new ice-lolly manufacturing cycle.

## Claims

1. A machine for making ice-lollies or ice creams on sticks, comprising a freezing tank (2) containing a liquid which is not freezable at the ice-lolly formation temperature, in heat-exchange relation with the evaporator (4) of a refrigerating unit (4,5,6,7), the molds (3) for the formation of the ice-lollies being immersed in said liquid, characterized in that it comprises a first reservoir (8) containing said cold unfreezable liquid, a circuit for the flow between said first reservoir (8) and said tank (2) comprising a first delivery pump (10) and a return spillway duct (15); a second reservoir (9) whose capacity is reduced to a smaller content than that of said freezing tank (2), which contains a liquid and is provided with means (19) to heat said liquid, and a second liquid delivery pump (16) from said second reservoir to the tank (2), thermostat means (20) to control the temperature in said tank (2), and control valve means (13) interposed between the delivery sides of said first and second pumps (10-16) and said tank (2), and controlled by the flow from said pumps to selectively close the delivery side of the disactivated pump (10;16) and open that of the activated pump (16;10).

2. A machine according to claim 1, characterized in that said control valve means comprises a valve body (13), two inlet ports (112,118) disposed at an angle from each other within said valve body (13) and connected each to the delivery side of one of said two pumps (10;16); an outlet port connected to said tank (2); and a pivotable flap valve (113) hinged within said valve body (13) and adapted to be displaced by the flow of liquid created by one or the other of said pumps (10; 16) so as to close one or the other of said inlet ports (118; 112).

3. A machine according to claim 1, characterized in that said pumps (10; 16) are controlled by means of said control thermostat means (20), or other means such as timers, pressure switches, or the like.

4. A method of operating a machine according to the preceding claims, comprising the steps of feeding a cold liquid from a reservoir (8) to a tank (2) where ice-lollies are formed; of circulating said cold liquid from said reservoir (8) to said tank (2) until the freezing temperature of the lollies has been reached; of draining said cold liquid from said tank (2) into said reservoir (8); of feeding a hot liquid from a reservoir (9) having heating means (19) into said tank (2), so as to cause the detachment of the ice-lollies from the walls of the mold (3) for the formation thereof; of draining said hot liquid from said tank (2) into said heating reservoir (9); and of feeding again the cold liquid into said tank (2) to start a new ice-lolly manufacturing cycle.

## Patentansprüche

1. Maschine zur Herstellung von Lutsch-Eis oder Eis am Stiel mit einem Gefriertank (2), der eine Flüssigkeit enthält, die bei der Herstellungstemperatur des Lutsch-Eises nicht gefrieren kann, der in Wärmeaustausch mit dem Verdampfer (4) einer Gefriereinheit (4,5,6,7) steht, wobei die Formen (3) für die Herstellung des Lutsch-Eises in die Flüssigkeit eintaucht,
**dadurch gekennzeichnet**,
daß ein erstes Reservoir (8) vorgesehen ist, das die kalte, nicht frierende Flüssigkeit enthält, daß ein Kreislauf für den Strom zwischen dem ersten Reservoir (8) und dem Tank (2) vorgesehen ist, der eine erste Abgabe-Pumpe (10) und eine Rückkehr-Überlaufleitung (15) enthält, daß ein zweites Reservoir (9) vorgesehen ist, dessen Kapazität kleiner ist als diejenige des Gefriertanks (2), das eine Flüssigkeit enthält und mit einer Heizung (19) für die Flüssigkeit versehen ist, und mit einer zweiten Abgabepumpe (16) für die Flüssigkeit aus dem zweiten Reservoir zum Tank (2), daß weiterhin ein Thermostat (20) vorgesehen ist, um die Temperatur im Tank (2) zu steuern, und daß ein Steuerungsventil (13) zwischen den Abgabeseiten der ersten und der zweiten Pumpe (10, 16) und dem Tank (2) vorgesehen ist, kontrolliert vom Strom von den Pumpen, um die Abgabeseite der nicht aktivierten Pumpe (10; 16) selektiv zu schließen und diejenige der aktivierten Pumpe (16,; 10) zu öffnen.

2. Maschine nach Anspruch 1,
**dadurch gekennzeichnet,**
daß das Steuerventil einen Ventilkörper (13) aufweist, zwei Einlaßöffnungen (112, 118), die in einem Winkel zueinander innerhalb des Ventilkörpers (13) angeordnet sind, und die jeweils an die Abgabeseite einer der beiden Pumpen (10; 16) angeschlossen sind, daß fernerhin eine Auslaßöffnung an den Tank (2) angeschlossen ist, und daß ein schwenkbares Klappenventil (113) innerhalb des Ventilkörpers (13) angelenkt ist und so ausgebildet ist, daß es vom Flüssigkeitsstrom verschoben werden kann, der von der einen oder anderen der beiden Pumpen (10; 16) geschaffen wird, so daß die eine oder andere der Einlaßöffnungen (118; 112) geschlossen wird.

3. Maschine nach Anspruch 1,
**dadurch gekennzeichnet**,
daß die Pumpen (10; 16) mit Hilfe des Thermostaten (20) gesteuert werden oder auch mit Hilfe anderer Mittel, beispielsweise eines Zeitschaltgeräts, eines Druckschalters oder dergleichen.

4. Verfahren zum Betätigen einer Maschine nach einem der vorhergehenden Patentansprüche,
**dadurch gekennzeichnet**,
daß eine kalte Flüssigkeit von einem Reservoir (8) zu einem Tank (2) gefördert wird, wo Lutsch-Eis geformt wird, daß die kalte Flüssigkeit vom Reservoir (8) zu dem Tank (2) umgepumpt wird, bis die Gefriertemperatur des Lutsch-Eises erreicht worden ist, daß die kalte Flüssigkeit vom Tank (2) in das Reservoir (8) abgezogen wird, daß eine heiße Flüssigkeit von einem Reservoir (9) mit einer Heizung (19) in den Tank (2) gepumpt wird, so daß das Lösen des Lutsch-Eises von den Wänden der Form (3) bewirkt wird, daß die heiße Flüssigkeit aus dem Tank (2) in das Heizreservoir (9) abgelassen wird, und daß die kalte Flüssigkeit wiederum in den Tank (2) gefördert wird, um einen neuen Zyklus zur Herstellung von Lutsch-Eis zu starten.

## Revendications

1. Une machine pour la fabrication d' Esquimaux ou de crèmes glacées sur bâtonnets, comprenant une cuve de congélation (2) qui contient une liquide qui ne peut pas se congéler à la température de formation des Esquimaux, dans une relation d'échange de chaleur avec l'évaporateur (4) d'une unité de réfrigération (4, 5, 6, 7), les moules (3) pour la formation des Esquimaux étant immergés dans le liquide précité, caractérisée en ce qu'elle comprend un premier réservoir (8) contenant le liquide froid ne pouvant pas se congeler, un circuit pour la circulation entre le premier réservoir (8) et la cuve (2), comprenant une première pompe (10) pour débiter le liquide et un conduit de trop-plein de retour (15) ; un second réservoir (9) dont la capacité est réduite à une valeur inférieure à celle de la cuve de congélation (2), qui contient un liquide et qui comporte des moyens (19) pour chauffer ce liquide, et une second pompe (16) débitant le liquide à partir du second réservoir vers la cuve (2), des moyens thermostatiques (20) pour commander la température dans la cuve (2) et une structure de vanne de commande (13) interposée entre les côtés d'évacuation des première et seconde pompes (10-16) et la cuve (2), et commandée par l'écoulement à partir des pompes précitées, de façon à fermer sélectivement le côté d'évacuation de la pompe désactivée (10 ; 16) et à ouvrir celui de la pompe activée (16 ; 10).

2. Une machine selon la revendication 1, caractérisée en ce que la structure de vanne de commande comprend un corps de vanne (13), deux orifices d'entrée (112, 118) disposés de façon à faire un angle entre eux dans le corps de vanne (13) et respectivement reliés au côté d'évacuation de l'une des deux pompes (10 ; 16) ; et un orifice de sortie relié à la cuve (2) ; et un clapet pivotant (113) qui est monté de façon pivotante à l'intérieur du corps de vanne (13) et qui est conçu pour être déplacé par l'écoulement de liquide qui est produit par l'une ou l'autre des pompes (10 ; 16), de façon à fermer l'un ou l'autre des orifices d'entrée (118 ; 112).

3. Une machine selon la revendication 1, caractérisée en ce que les pompes (10 ; 16) sont commandées par les moyens de commande thermostatiques (20), ou d'autres moyens tels que des temporisateurs, des manocontacts, ou autres.

4. Un procédé pour faire fonctionner une machine selon les revendications précédentes, comprenant les étapes suivantes : on dirige un liquide froid à partir d'un réservoir (8) vers une cuve (2) dans laquelle des Esquimaux sont formés ; on fait circuler ce liquide froid à partir du réservoir (8) vers la cuve jusqu'à ce que la température de congélation des Esquimaux ait été atteinte ; on évacue le liquide froid à partir de la cuve (2) vers le réservoir (8) ; on dirige un liquide chaud à partir d'un réservoir (9) comportant des moyens de chauffage (19), vers la cuve (2), de façon à provoquer le détachement des Esquimaux par rapport aux parois du moule (3) pour la formation de ces derniers ; on évacue le liquide chaud à partir de la cuve (2) vers le réservoir chauffant (9) ; et on dirige à nouveau le liquide froid vers la cuve (2) pour commencer un nouveau cycle de fabrication d'Esquimaux.
